# EUROPÄISCHE PATENTANMELDUNG

(11) **EP 3 388 994 A1**
(43) Veröffentlichungstag der Anmeldung: **17.10.2018**
(21) Anmeldenummer: 17166334.7
(22) Anmeldetag: 12.04.2017
(51) Int. Cl.: G06Q 20/36, G06Q 20/00

(54) **VERFAHREN UND VORRICHTUNG ZUM RECHNERGESTÜTZTEN TESTEN EINER BLOCKKETTE**

(71) Anmelder: Siemens Aktiengesellschaft, 80333 München (DE)
(72) Erfinder: Falk, Rainer, 85586 Poing (DE)

(57) **Zusammenfassung**

Die Erfindung betrifft ein Verfahren zum rechnergestützten Testen einer Blockkette mit folgenden Verfahrensschritten. Generieren einer vorgegebenen Transaktion und/oder eines vorgegebenen Smart-Contracts, wobei der vorgegebenen Transaktion und/oder dem vorgegebenen Smart-Contract jeweils ein Vorgabewert zugeordnet ist. Einfügen der vorgegebenen Transaktion und/oder des vorgegebenen Smart-Contracts in die Blockkette. Ausführen der vorgegebenen Transaktion und/oder des vorgegebenen Smart-Contracts, wobei ein Messwert des Ausführens der vorgegebenen Transaktion und/oder dem vorgegebenen Smart-Contract erfasst wird. Testen des Messwertes anhand des Vorgabewertes, wobei bei einer Abweichung von dem Vorgabewert ein Steuersignal bereitgestellt wird.

## Beschreibung

Die Erfindung bezieht sich auf ein Verfahren und eine Vorrichtung zum rechnergestützten Testen einer Blockkette.

Die Technologie von Blockketten (engl. Blockchains) bzw. "Distributed Ledgers" ist aktuell eine intensiv diskutierte Technologie. Neben Anwendungen für dezentrale Bezahlsysteme (z.B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst beispielsweise einen Programmcode, der auch als sogenannter "Smart Contract" bezeichnet werden kann.

Eine Aufgabe der vorliegenden Erfindung ist es, ein Verfahren und eine Vorrichtung zum rechnergestützten Testen einer Blockkette bereitzustellen.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Gemäß einem ersten Aspekt betrifft die Erfindung ein Verfahren zum rechnergestützten Testen einer Blockkette mit folgenden Verfahrensschritten:
- Generieren einer vorgegebenen Transaktion und/oder eines vorgegebenen Smart-Contracts, wobei der vorgegebenen Transaktion und/oder dem vorgegebenen Smart-Contract jeweils ein Vorgabewert zugeordnet ist;
- Einfügen der vorgegebenen Transaktion und/oder des vorgegebenen Smart-Contracts in der Blockkette;
- Ausführen der vorgegebenen Transaktion und/oder des vorgegebenen Smart-Contracts, wobei ein Messwert des Ausführens der vorgegebenen Transaktion und/oder dem vorgegebenen Smart-Contract erfasst wird;
- Testen des Messwertes anhand des Vorgabewertes, wobei bei einer Abweichung von dem Vorgabewert ein Steuersignal bereitgestellt wird.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem "Prozessor" kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder einem "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter "Bereitstellen" kann im Zusammenhang mit der Erfindung beispielsweise ein Laden oder ein Speichern, beispielsweise des ersten Transaktionsdatensatzes und/oder der Steuerungsaktions-Transaktion und/oder Zustands-Assertion-Transaktion, auf oder von einem Speichermodul verstanden werden.

Unter einer "Prüfsumme", beispielsweise die erste Prüfsumme, eine zweite Prüfsumme, eine Knoten-Prüfsumme, eine Transaktions-Prüfsumme oder eine Verkettungsprüfsumme, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine der Transaktionen und/oder einem Glied-Header gebildet oder berechnet werden. Bei einer Prüfsumme kann es sich insbesondere um eine Prüfsumme/n oder Hashwert/e eines Hash-Baumes (z. B. Merkle-Baum, Patricia-Baum) handeln. Weiterhin kann darunter insbesondere auch eine digitale Signatur oder ein kryptographischer Nachrichtenauthentisierungscode verstanden werden.

Unter einer "erster Prüfsumme" kann im Zusammenhang mit der Erfindung eine Prüfsumme verstanden werden, die beispielsweise über die Daten(sätze) einer Transaktion berechnet wird. Anstelle der Daten, z. B. der ausgewählte Teil der Daten, kann beispielsweise eine Transaktion nur die Prüfsumme - genauer die entsprechende zugehörige erste Prüfsumme - für diese Daten umfassen. Die entsprechenden Daten können beispielsweise dann in einer weiteren Transaktion eines weiteren Gliedes bereitgestellt werden. Es ist beispielsweise aber auch denkbar, dass diese Daten über einen anderen Kommunikationskanal bereitgestellt werden. Ein Knoten kann dann beispielsweise die Integrität/Authentizität der Daten mittels der ersten Prüfsumme aus der Blockkette prüfen. Auch kann beispielsweise zusätzlich zu der ersten Prüfsumme eine Zusatzdatensatz in den Transaktionen abgelegt sein, der insbesondere einen Speicherort angibt, wo die Daten abgerufen werden können. Das ist insbesondere dahingehend vorteilhaft, um eine Datengröße der Blockkette möglichst gering zu halten. Zusätzlich kann beispielsweise eine Berechnung einer Transaktions-Prüfsumme beschleunigt werden, da hier bereits Prüfsummen vorliegen und diese gleich als Blätter eines Merkle-Baumes verwendet werden können. Dabei kann insbesondere darauf verzichtet werden, eine separate Prüfsumme über den Zusatzdatensatz zu bilden.

Unter "Transaktions-Prüfsumme" kann im Zusammenhang mit der Erfindung eine Prüfsumme verstanden werden, die insbesondere über die jeweiligen Transaktionen eines der jeweiligen Glieder und/oder vorhergehende Glied/Vorgänger-Glied eines Gliedes der Blockkette gebildet werden. Zusätzlich oder alternativ kann die Transaktions-Prüfsumme insbesondere auch über Transaktionen eines vorhergehenden Gliedes/Vorgänger-Gliedes des Gliedes gebildet worden sein. Die Transaktions-Prüfsumme kann dabei insbesondere auch mittels eines Hash-Baumes, beispielsweise einem Merkle-Baum [1] oder einem Patricia-Baum, realisiert werden, wobei die Transaktions-Prüfsumme insbesondere die Wurzel-Prüfsumme des Merkle-Baumes bzw. eines Patricia-Baumes bzw. eines binären Hashbaumes ist. Insbesondere werden Transaktionen mittels weiteren Prüfsummen aus dem Merkle-Baum bzw. Patricia-Baum abgesichert, wobei insbesondere die weiteren Prüfsummen Blätter im Merkle-Baum bzw. Patricia-Baum sind. Die Transaktions-Prüfsumme kann beispielsweise die Transaktionen absichern, indem die Wurzel-Prüfsumme aus den weiteren Prüfsummen gebildet wird. Die Transaktions-Prüfsumme kann insbesondere für Transaktionen eines ersten Gliedes der Glieder berechnet werden. Insbesondere kann eine solche Transaktions-Prüfsumme in ein nachfolgendes Glied des ersten Gliedes eingehen, um dieses nachfolgende Glied beispielsweise mit ihren vorhergehenden Gliedern (z. B. das erste Glied) zu verketten und insbesondere damit eine Integrität der Blockkette prüfbar zu machen.

Unter einer "Verkettungsprüfsumme" kann im Zusammenhang mit der Erfindung eine Prüfsumme verstanden werden, die für ein jeweiliges Glied der Blockkette das vorhergehende Glied der Blockkette angibt bzw. referenziert (in der Fachsprache insbesondere häufig als "previous block hash" bezeichnet) [1]. Als Verkettungsprüfsumme kann beispielsweise die Transaktions-Prüfsumme eines Gliedes verwendet werden. Es ist beispielsweise aber auch möglich, dass eine Prüfsumme über einen Header des vorhergehenden Gliedes oder über das gesamte vorhergehende Glied gebildet wird und als Verkettungsprüfsumme verwendet wird. Ein jeweiliges Glied der Blockkette umfasst vorzugsweise jeweils eine Verkettungsprüfsumme, die für ein vorhergehendes Glied des jeweiligen Gliedes berechnet wurde.

Unter "Verketten der/von Gliedern einer Blockkette" kann im Zusammenhang mit der Erfindung beispielsweise verstanden werden, dass Glieder jeweils eine Information (z. B. Verkettungsprüfsumme) umfassen, die auf ein anderes Glied oder mehrere andere Glieder der Blockkette verweisen bzw. diese referenzieren [1].

Unter "Einfügen in die Blockkette" und dergleichen kann im Zusammenhang mit der Erfindung beispielsweise verstanden werden, dass insbesondere eine Transaktion bzw. die Transaktionen oder ein Glied mit seinen Transaktionen an einen oder mehrere Knoten einer Blockkette übermittelt werden. Werden diese Transaktionen beispielsweise erfolgreich validiert (z. B. durch den/die Knoten), werden diese Transaktionen insbesondere als neues Glied/er mit mindestens einem vorhandenen Glied der Blockkette verkettet [1]. Insbesondere kann unter dem Validieren von Transaktionen bzw. der Aufnahme in ein Glied bzw. einen Block der Blockkette einer gültigen, validierten Transaktion bzw. das Abweisen einer ungültigen Transaktion kann als Ausführen der Transaktion bezeichnet werden. Durch das Ausführen von Testtransaktionen werden diese beispielsweise durch die Blockkette bearbeitet. Dies kann insbesondere dazu führen, dass eine Transaktion in der Blockkette als gültige, validierte Transaktion enthalten ist, d. h. insbesondere in einem verketteten Block bzw. Glied der Blockkette enthalten bzw. referenziert ist. Es kann jedoch beispielsweise auch dazu führen, dass eine Transaktion bei der Ausführung als ungültig, nicht valide erkannt wird und diese Transaktion insbesondere nicht in der Blockkette als gültige, validierte Transaktion enthalten ist, d. h. in einem verketteten Block bzw. Glied der Blockkette enthalten bzw. referenziert ist. Insbesondere kann dieses Validieren und/oder Verketten durch einen vertrauenswürdigen Knoten (z. B. einem Mining Node oder einer Blockketten-Plattform) erfolgen. Insbesondere kann dabei unter einer Blockketten-Plattform eine Blockkette als Dienst (engl. Blockkette as Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Glied hinterlegen, um insbesondere eine Identifizierbarkeit des Erstellers des Gliedes zu ermöglichen und/oder eine Identifizierbarkeit des Knotens zu ermöglichen, das das entsprechende Glied mit mindestens einem anderen Glied der Blockkette verkettet hat.

Unter "Transaktion" bzw. "Transaktionen" können im Zusammenhang mit der Erfindung beispielsweise ein Smart-Contract, eine Datenstruktur oder ein Transaktionsdatensatz verstanden werden, der insbesondere jeweils eine der Transaktionen oder mehrere Transkationen umfasst. Unter "Transaktion" bzw. "Transaktionen" können im Zusammenhang mit der Erfindung beispielsweise auch die Daten einer Transaktion eines Gliedes einer Bockkette (engl. Blockchain) verstanden werden. Ein Transaktionsdatensatz bzw. eine Transkation kann einen Programmcode umfassen, der insbesondere einen Smart Contract realisiert. Unter einem "Transaktionsdatensatz" können im Zusammenhang mit der Erfindung beispielsweise auch eine Transkation eines Gliedes einer Blockkette verstanden werden.

Unter einem "Programmcode" können im Zusammenhang mit der Erfindung beispielsweise Steuerungsbefehle, Programmbefehle, oder Steuerungsanweisungen verstanden werden, die insbesondere in einer Transaktion gespeichert sind.

Unter einem "Smart Contract" kann im Zusammenhang mit der Erfindung beispielsweise ein ausführbarer Programmcode verstanden werden. Der Programmcode ist insbesondere auf einer virtuellen Maschine ausführbar.

Unter "Speichern von Transaktionen" kann im Zusammenhang mit der Erfindung beispielsweise ein Speichern von Daten (z. B. des ausgewählten Teils der Daten usw.) in einer Transaktion bzw. in einem Transaktionsdatensatz verstanden werden. Es ist beispielsweise auch denkbar, dass nicht die Daten direkt gespeichert werden, sondern nur eine Prüfsumme (z. B. die erste Prüfsumme) der entsprechenden Daten in der Transaktion gespeichert werden.

Unter "Proof-of-Work-Nachweis" kann im Zusammenhang mit der Erfindung beispielsweise ein Lösen einer rechenintensiven Aufgabe verstanden werden, die insbesondere abhängig vom Glied-Inhalt/Inhalt eines ersten Transaktionsdatensatzes zu lösen ist [1]. Eine solche rechenintensive Aufgabe wird beispielsweise auch als kryptographisches Puzzle bezeichnet.

Unter "Glied" kann im Zusammenhang mit der Erfindung beispielsweise ein Block einer Blockkette verstanden werden, die insbesondere als Datenstruktur realisiert ist und vorzugsweise jeweils eine der Transaktionen oder mehrere der Transaktionen umfasst. Ein Glied kann beispielsweise Angaben zur Größe (Datengröße in Byte) des Gliedes, einen Glied-Header (engl. Blockheader), einen Transaktionszähler und eine oder mehrere Transaktionen umfassen [1]. Der Glied-Header kann beispielsweise eine Version, eine Verkettungsprüfsumme, eine Transkations-Prüfsumme, einen Zeitstempel, einen Proof-of-Work Nachweis und eine Nonce (Einmalwert, Zufallswert oder Zähler, der für den Proof-of-Work Nachweis verwendet wird) umfassen [1].

Unter "Nonce" kann im Zusammenhang mit der Erfindung beispielsweise eine kryptographische Nonce verstanden werden (Abkürzung für: "used only once" [2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehender Glieder eines (ersten) Gliedes der Blockkette" kann im Zusammenhang mit der Erfindung beispielsweise nur das Glied der Blockkette verstanden werden, das insbesondere einem (ersten) Glied direkt vorhergeht. Alternativ können unter "vorhergehender Glieder eines (ersten) Gliedes der Blockkette" insbesondere auch alle Glieder der Blockkette verstanden werden, die dem ersten Glied vorhergehen. Hierdurch kann beispielsweise die Verkettungsprüfsumme oder die Transaktions-Prüfsumme insbesondere nur über das dem ersten Glied direkt vorhergehende Glied (bzw. deren Transaktionen) oder über alle dem ersten Glied vorhergehenden Glieder (bzw. deren Transaktionen) gebildet werden.

Unter einem "Blockketten-Knoten", "Knoten", "Knoten einer Blockkette" und dergleichen, können im Zusammenhang mit der Erfindung beispielsweise Geräte (z. B. Feldgeräte), Rechner, Clients oder Teilnehmer verstanden werden, die Operationen mit einer Blockkette durchführen [1]. Solche Knoten können beispielsweise Transaktionen einer Blockkette bzw. deren Glieder ausführen oder neue Glieder mit neuen Transaktionen in die Blockkette mittels neuen Gliedern einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Gliedes mit der Blockkette, eine zweite Prüfsumme (z. B. eine digitale Signatur oder ein Zertifikat) in dem neuen Glied speichern. Damit kann insbesondere ein Nachweis bereitgestellt werden, der angibt, dass das Glied von einem bestimmten Knoten eingefügt wurde bzw. seine Herkunft angibt.

Unter einem "Rechner" kann im Zusammenhang mit der Erfindung beispielsweise ein Computer(system), ein Client, ein Gerät oder ein Server, die jeweils außerhalb der Blockkette angeordnet sind bzw. kein Teilnehmer der Blockkette sind (also keine Operationen mit der Blockkette durchführen oder diese nur abfragen, ohne jedoch Transaktionen durchzuführen, Glieder einfügen oder Proof-of-Work-Nachweise berechnen), verstanden werden. Alternativ kann insbesondere auch unter einem Rechner ein Knoten einer Blockkette verstanden werden.

Das Verfahren ist dahingehend vorteilhaft, um beispielsweise ein Abweichen einer Blockchain-Realisierung von einer erwarteten Funktionalität im laufenden Betrieb zu erkennen. Dadurch kann insbesondere ein einzelner Client bzw. Anwender prüfen, ob eine verteilte bzw. bereitgestellte Blockchain-Infrastruktur, wie erwartet, funktioniert. Dies ist insbesondere dann vorteilhaft, wenn die Blockkette für sicherheitskritische Anwendungen (Steuerung von Anlagen wichtiger Infrastruktur wie z. B. Kraftwerksanlagen) verwendet werden soll. Insbesondere wird durch die Erfindung zur Laufzeit überprüft, ob eine Blockkette noch läuft/aktiv ist (also der Betrieb nicht eingestellt wurde, unterbrochen ist, oder sich die Blockchain "aufgehängt" hat). Die Blockkette ist beispielsweise durch eine Vielzahl von verteilten Knoten verteilt realisiert. Deren Anzahl ist insbesondere nicht explizit bekannt, sodass es schwierig ist auf konventionellem Wege (z. B. durch einen Ping Anweisung für die Netzwerkadressen bekannter Knoten) zu überprüfen, ob noch genügend Knoten für einen ordnungsgemäßen Betrieb der Blockkette laufen (dies kann z. B. durch eine Sicherheitsrichtlinie für die Blockkette vorgegeben werden) laufen oder ob überhaupt noch andere Knoten der Blockkette erreichbar sind und Transaktionen ausführen oder diese validieren. Weiterhin kann insbesondere überprüft werden, ob die Funktionalität der Blockkette auf unerwartete bzw. unzulässige Weise modifiziert ist. Dies ist insbesondere bei langlebigen technischen Systemen notwendig, die eine Blockkette beispielsweise für Safety-kritische Steuerungsaufgaben verwenden.

Beispielsweise kann getestet werden, ob die vorgegebene Transaktion innerhalb eines vorgegebenen Zeitintervalls in einem Glied der Blockkette auftaucht und/oder die vorgegebene Transaktion erfolgreich validiert wurde. Wird beispielsweise erfolglos versucht die vorgegebene Transaktion in die Blockkette einzufügen, ist die vorgegebene Transaktion nicht durch ein Glied der Blockkette umfasst. In einem solchen Fall kann beispielsweise beim Testen nach einem vorgegeben Zeitintervall ein festgelegter Wert als Messwert erfasst werden (z. B. Time-Out). Fordert nun beispielsweise der Vorgabewert, dass z. B. das Validieren der vorgegebenen Transaktion innerhalb eines vorgegebenen Zeitfensters (z. B. 30 Sekunden) durchgeführt sein muss, wird beim Vergleichen des Vorgabewertes mit dem Messwert eine Abweichung festgestellt. Dies kann insbesondere auf analoge Weise auch erfolgen, wenn das Einfügen bzw. Verketten des Gliedes, das die vorgegebene Transaktion umfasst, in/mit der Blockkette länger als das vorgegebene Zeitfenster (also der Vorgabewert) fordert.

Bei einer ersten Ausführungsform des Verfahrens wird beim Einfügen versucht, die vorgegebene Transaktion und/oder den vorgegebenen Smart-Contract in einem Glied der Blockkette zu speichern und das Glied mit mindestens einem Glied der Blockkette zu verketten.

Das Verfahren ist dahingehend vorteilhaft, um insbesondere herauszufinden, ob die Knoten der Blockkette überhaupt noch Transaktionen validieren können. Bei dem Speichern wird insbesondere die vorgegebene Transaktion und/oder der vorgegebenen Smart-Contract durch das Glied aufgenommen. Sind die Knoten beispielsweise ausgefallen, so können diese das Glied mit einem der anderen Glieder der Blockkette verketten. Hierdurch wird insbesondere beim Testen der vorgegebenen Transaktion festgestellt, dass diese überhaupt nicht in der Blockkette auftaucht (durch die Blockkette umfasst ist).

Bei einer weiteren Ausführungsform werden die Glieder der Blockkette über eine kryptographische Hashfunktion (H) miteinander verkettet.

Bei einer weiteren Ausführungsform des Verfahrens wird das Verfahren zyklisch wiederholt oder durch einen Trigger gesteuert.

Das Verfahren ist dahingehend vorteilhaft, um insbesondere die Blockkette regelmäßig zu testen. Beispielsweise kann für das zyklische Wiederholen ein fünfstündiger Zyklus gewählt werden. Wird das Verfahren beispielsweise durch einen Trigger angesteuert, so kann dies insbesondere beim Booten eines Knotens während seiner Startphase durchgeführt werden.

Bei einer weiteren Ausführungsform des Verfahrens werden bei einem erneuten Testen eine neue vorgegebene Transaktion und/oder ein neuer vorgegebener Smart-Contract mit einem neuen Inhalt und einem jeweils neuen Vorgabewert, der diesen zugeordnet wird, generiert.

Das Verfahren ist dahingehend vorteilhaft, um insbesondere den Inhalt der Tests zu variieren. Hierdurch wird insbesondere erreicht, dass Knoten, die durch unberechtigte Dritte manipuliert wurden, nicht auf einfache Weise einen korrekten Messwert bereitstellen können.

Bei einer weiteren Ausführungsform des Verfahrens wird durch das Testen überprüft, ob die Blockkette noch aktiv ist.

Bei einer weiteren Ausführungsform des Verfahrens wird durch das Testen überprüft, ob und mit welcher Zeitverzögerung die vorgegebene Transaktion und/oder der vorgegebenen Smart-Contract in einem Glied der Blockkette enthalten ist.

Bei einer weiteren Ausführungsform des Verfahrens wird das Testen durch einen oder mehrere Knoten der Blockkette durchgeführt.

Das Verfahren ist dahingehend vorteilhaft, um insbesondere die Zuverlässigkeit des Testens zu erhöhen, da hierdurch redundant von mehreren Knoten der Blockkette diese getestet werden kann.

Bei einer weiteren Ausführungsform des Verfahrens umfasst die vorgegebene Transaktion und/oder der vorgegebenen Smart-Contract einen Nonce-Wert.

Das Verfahren ist dahingehend vorteilhaft, um insbesondere auf einfache Weise bei einem erneuten Testen der Blockkette den Inhalt der vorgegebenen Transaktion zu variieren.

Bei einer weiteren Ausführungsform des Verfahrens werden der Messwert und/oder die Abweichung und/oder der Vorgabewert als Transaktion in die Blockkette eingefügt oder mit dieser verkettet, wobei dieses Einfügen durch einen Knoten unter Verwendung des Steuersignals erfolgt.

Gemäß einem weiteren Aspekt betrifft die Erfindung einen Testgenerator (z. B. einen Knoten) zum Testen einer Blockkette, aufweisend:
- ein Bereitstellungsmodul zum Bereitstellen einer vorgegebenen Transaktion und/oder eines vorgegebenen Smart-Contracts, wobei der vorgegebenen Transaktion und/oder dem vorgegebenen Smart-Contract jeweils ein Vorgabewert zugeordnet ist;
- ein Speichermodul zum Speichern der vorgegebenen Transaktion und/oder dem vorgegebenen Smart-Contract in der Blockkette;
- ein Ausführungsmodul zum Ausführen der vorgegebenen Transaktion und/oder des vorgegebenen Smart-Contracts, wobei ein Messwert des Ausführens für die vorgegebenen Transaktion und/oder den vorgegebenen Smart-Contract erfasst wird;
- ein Testmodul zum Testen des Messwertes anhand des Vorgabewertes, wobei bei einer Abweichung von dem Vorgabewert ein Steuersignal bereitgestellt wird.

Bei einer weiteren Ausführungsform des Testgenerators umfasst der Testgenerator ein Übermittlungsmodul zum Übermitteln der vorgegebenen Transaktion und/oder dem vorgegebenen Smart-Contract.

Das Verfahren ist dahingehend vorteilhaft, um insbesondere den vorgegebenen Transaktionen an Knoten oder Rechner außerhalb der Blockkette zu übermitteln. Das Übermitteln kann beispielsweise verbindungsorientiert (z. B. TCP/IP basierend), verbindungslos (z. B. UDP basierend) oder broadcast/multicast-basierend erfolgen.

Bei einer weiteren Ausführungsform des Testgenerators umfasst der Testgenerator zumindest ein weiteres Modul oder mehrere weitere Module zur Durchführung des erfindungsgemäßen Verfahrens (oder einer seiner Ausführungsformen) zum rechnergestützten Testen der Blockkette.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass der genannte erfindungsgemäße Testgenerator erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es den erfindungsgemäßen Testgenerator erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung als ein Ablaufdiagramm;
- Fig. 2: ein zweites Ausführungsbeispiel der Erfindung;
- Fig. 3: ein drittes Ausführungsbeispiel der Erfindung;
- Fig. 4: ein viertes Ausführungsbeispiel der Erfindung als Testgenerator;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies explizit in dem jeweiligen Ausführungsbeispiel genannt sein muss.

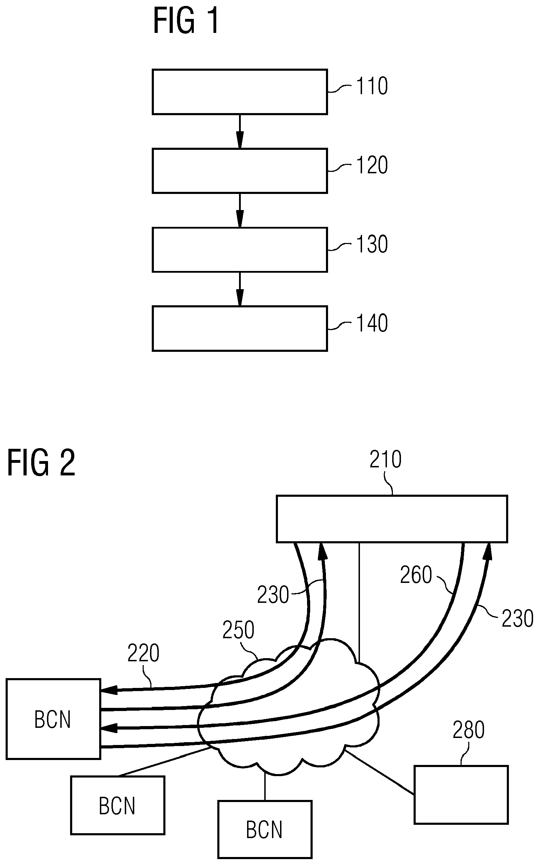

Die Fig. 1 zeigt ein erstes Ausführungsbeispiel der Erfindung als ein Ablaufdiagramm des erfindungsgemäßen Verfahrens zum rechnergestützten Testen einer Blockkette.

Das Verfahren umfasst einen ersten Verfahrensschritt 110 zum Generieren einer vorgegebenen Transaktion und/oder eines vorgegebenen Smart-Contracts, wobei der vorgegebenen Transaktion und/oder dem vorgegebenen Smart-Contract jeweils ein Vorgabewert zugeordnet ist. Die vorgegebene Transaktion kann dabei eine kryptographische Nonce umfassen, die als Parameter für eine kryptographische Funktion verwendet wird und ein reproduzierbares Ergebnis (auch bei mehrfacher Anwendung der kryptographischen Funktion) für diese Nonce liefert. Dieses reproduzierbare Ergebnis kann dann beispielsweise als der Vorgabewert verwendet werden. Der Vorgabewert kann darüber hinaus noch weitere Daten enthalten, wie beispielsweise ein Zeitfenster innerhalb dem die vorgegebene Transaktion mit der Blockkette verkettet sein muss. Auch kann der Vorgabewert ein weiteres Zeitfenster umfassen, das angibt, wie lange eine Validierung oder ein Ausführen der vorgegenen Transaktion maximal dauern darf.

Das Verfahren umfasst einen zweiten Verfahrensschritt zum Einfügen 120 der vorgegebenen Transaktion und/oder des vorgegebenen Smart-Contracts in die Blockkette. Hierfür kann die vorgegebene Transaktion an Knoten der Blockkette übermittelt werden, die die vorgegebenen Transaktionen validieren sollen.

Das Verfahren umfasst einen dritten Verfahrensschritt zum Ausführen 130 der vorgegebenen Transaktion und/oder des vorgegebenen Smart-Contracts, wobei ein Messwert des Ausführens der vorgegebenen Transaktion und/oder dem vorgegebenen Smart-Contract erfasst wird. Hier wird nun darauf gewartet, dass die vorgegebene Transaktion in einem Glied der Blockkette umfasst ist. Ist die vorgegebene Transaktion z. B. nach einem vorgegenen Zeitfenster nicht in einem Glied der Blockkette enthalten, so wird als Messwert beispielsweise ein Timeout erfasst.

Das Verfahren umfasst einen vierten Verfahrensschritt zum Testen 140 des Messwertes anhand des Vorgabewertes, wobei bei einer Abweichung von dem Vorgabewert und/oder bei einem Übereinstimmen mit dem Vorgabewert ein Steuersignal bereitgestellt wird. Hierzu kann der Vorgabewert beispielsweise mit dem Messwert verglichen werden. Der Vorgabewert kann beispielsweise Schwellwerte (z. B. eine Zeitdauer bis eine Transaktion erfolgreich validiert in der Blockkette enthalten ist, eine Anzahl von erfolgreich validierten Transaktionen, die in der Blockkette enthalten sind) vorgeben, die durch den Messwert nicht überschritten werden dürfen bzw. dieser einhalten soll.

Fordert der Vorgabewert beispielsweise, dass die vorgegebene Transaktion innerhalb von 30 Sekunden in einem Glied der Blockkette enthalten sein soll und der Messwert enthält einen Timeout, so wird eine Abweichung vom Vorgabewert festgestellt. Enthält der Messwert hingegen z. B. 20 Sekunden, so wird eine Übereinstimmung mit dem Vorgabewert festgestellt.

Das Ergebnis (also die Übereinstimmung oder die Abweichung) kann dann durch das Steuersignal bereitgestellt werden. Das Steuersignal kann dabei dem Messwert, den Vorgabewert, das Ergebnis oder eine Kombination aus diesen Daten umfassen.

Mit anderen Worten wird ein Verfahren realisiert, bei dem der Testvektor in Form einer vorgegebenen Transaktion (z. B. eine gültige Transaktion und ungültige Transaktion) und/oder einen vorgegebenen Smart-Contract für die Blockkette bereitgestellt wird.

Es wird weiterhin geprüft, ob die vorgegebene Transaktion/Smart-Contract mit ihrem jeweiligen Vorgabewert übereinstimmt. Dies können z. B. Positiv-Tests in Form einer gültigen Transaktion sein, die dann als validierte Transaktion in der Blockkette enthalten sind. Dies können z. B. Negativ-Tests in Form einer ungültigen Transaktion sein, die in der Blockkette nicht als gültige/erfolgreich validierte Transaktion enthalten sein dürfen.

Das Verfahren bzw. der Test wird vorzugsweise regelmäßig wiederholt. Wird das Verfahren wiederholt, können bei einer Wiederholung insbesondere neue vorgegebene Transaktionen (oder eine Vielzahl von vorgegebenen Transaktionen) in die Blockchain eingestellt werden, und diesen jeweils ein Vorgabewert zugeordnet werden.

Das Verfahren kann beispielsweise durch einen oder mehrere Knoten realisiert sein. Ein Knoten kann beispielsweise die vorgegebene Transaktion in die Blockkette einfügen, versuchen zu verketten und testen, wenn der Knoten aktiviert wird (z. B. ein Power-Up Test beim Booten eines Knotens) und/oder wiederholt im laufenden Betrieb des Knotens.

Ebenso ist es möglich, dass insbesondere ein Smart-Contract die vorgegebene Transaktion generiert, einfügt, ausführt und testet. Alternativ kann ein erster Smart Contract die vorgegebene Transaktion erzeugen und einfügen, während ein zweiter Smart-Contract die vorgegebene Transaktion ausführt und testet.

Mit anderen Worten wird hierdurch ein Built-In-Self-Test einer Blockkette realisiert. Das Ergebnis des Testens kann der Blockkette als Transaktion bereitgestellt werden (z. B. in der gleichen Blockkette oder in einer zweiten Blockkette).

Weiterhin kann die Liveliness (z. B. ein Testen, ob noch genügend Knoten der Blockkette aktiv/erreichbar sind) der Blockkette überprüft werden, indem die vorgegebene Transaktion (z. B. in Form einer Liveliness-Test-Transaktion), die einen Nonce umfasst, in die Blockkette eingebracht wird, und überprüft/getestet wird, ob und wann (nach welcher Zeitspanne) diese vorgegebene Transaktion in der Blockkette bestätigt bzw. als erfolgreich validiert vorliegt (sie ist z. B. bestätigt, wenn sie in einem Glied der Blockchain enthalten ist).

Die Überprüfung/das Testen kann beispielsweise durch einen Knoten erfolgen, der eine Liveliness-Test-Transaktion in die Blockkette einstellt und prüft, ob bzw. mit welcher Verzögerung diese Transaktion bestätigt wird.

Die Überprüfung/das Testen kann beispielsweise auch durch einen Knoten realisiert sein, der die Liveliness-Test-Transaktion einstellt und deren Vorhandensein prüft.

Es ist beispielsweise ebenso möglich, dass ein erster Knoten Liveliness-Test-Transaktionen einstellt, die ein oder mehrere andere Knoten prüfen/testen. Dies ist insbesondere vorteilhaft, dass bei einer Vielzahl von Knoten nicht jeder Knoten separat die Liveliness der Blockkette überprüfen muss.

In einer weiteren Variante wird der Test der Liveliness der Blockkette bzw. deren Knoten durch einen Smart-Contract realisiert. Hierzu generiert der Smart-Contract die vorgegebene Transaktion (z. B. die Liveliness-Test-Transaktion), fügt diese in die Blockkette ein, führt die vorgegebene Transaktion aus und testet den Messwert gegen den Vorgabewert.

In einer weiteren Variante sind separate Smart Contracts vorgesehen, um Liveliness-Test-Transaktionen zu generieren, einzufügen, auszuführen und zu testen. Dazu kann beispielsweise eine Nonce (z. B. eine Zufallszahl oder ein mittels eines kryptographischen Schlüssels erzeugter Message Authentication Code oder eine digitale Signatur oder einen Hash-Wert) generiert und als eine vorgegebene Transaktion in Form einer Liveliness-Check-Transaktion in die Blockkette eingestellt werden.

Es wird überprüft/getestet, ob und nach welchem erfassten Messwert z. B. die Verzögerung bis diese Transaktion in der Blockkette bestätigt wird. Hierbei wird dann getestet, ob der Messwert den zugeordneten Vorgabewert einhält, z. B. gibt der Vorgabewert eine maximal zulässige Verzögerung vor, innerhalb der die Transaktion bestätigt sein soll. Ein Ergebnis dieses Tests kann in einer Variante als Liveliness-Attestierungs-Transaktion ebenfalls in die Blockkette (oder in eine zweite Blockkette) eingestellt werden.

Das Steuersignal kann auf unterschiedliche Art verwendet werden: Wenn das Steuersignal eine Fehlfunktion der Blockkette anzeigt, so kann beispielsweise eine akustische oder optische Alarmmeldung bereitgestellt werden, es kann ein elektrisches Schaltsignal bereitgestellt werden, oder es kann eine Fehlermeldung in einen Fehlerspeicher eingetragen werden. Weiterhin ist es möglich, eine Datenübertragung, z. B. an einer Netzwerkgrenze durch eine Firewall zu blockieren, oder ein Steuerungssystem in einen eigensicheren Betriebszustand (Fail Safe Betriebszustand) zu versetzen.

Die Fig. 2 zeigt ein zweites Ausführungsbeispiel der Erfindung, das von einem System realisiert wird.

Im Einzelnen zeigt die Fig. 2 ein beispielhaftes System mit mehreren (Blockketten-)Knoten BCN, die eine Blockkette realisieren (z.B. Bitcoin-Knoten oder Ethereum-Knoten), und über ein Netzwerk 250 (z. B. ein LAN, WAN oder das Internet) miteinander verbunden sind.

In diesem Beispiel ist ein Testgenerator 210 (ein spezieller Knoten bzw. Dienst) vorgesehen (und ebenfalls mit dem Netzwerk 250 verbunden), der versucht eine vorgegebene Transaktion(en) 220 (so wie dies beispielsweise in Fig. 1 erläutert wurde) in die Blockchain einzustellen. Dabei kann es sich um gültige Transaktionen (Positiv-Tests) und ungültige Transaktionen (Negativ-Tests) handeln. Der Testgenerator 210 überprüft, ob und welche der vorgegebenen Transaktionen in der Blockkette bestätigt 230 werden, d. h. in einem bestätigten Glied der Blockkette enthalten sind. Es wird überprüft, ob die vorgegebenen Transaktionen mit Positiv-Tests in der Blockkette enthalten sind, und dass keine vorgegebenen Transaktionen mit Negativ-Tests in der Blockkette enthalten ist. Das Ergebnis des Tests wird in diesem Beispiel ebenfalls als Transaktion (z. B. Ergebnis-Transaktion 260) der Blockkette bestätigt.

Dadurch können die Knoten BCN selbst oder andere Geräte 280 (z. B. Relying devices, Firewalls, Gateways) das Ergebnis überprüfen, ohne selbst den Test wiederholen zu müssen.

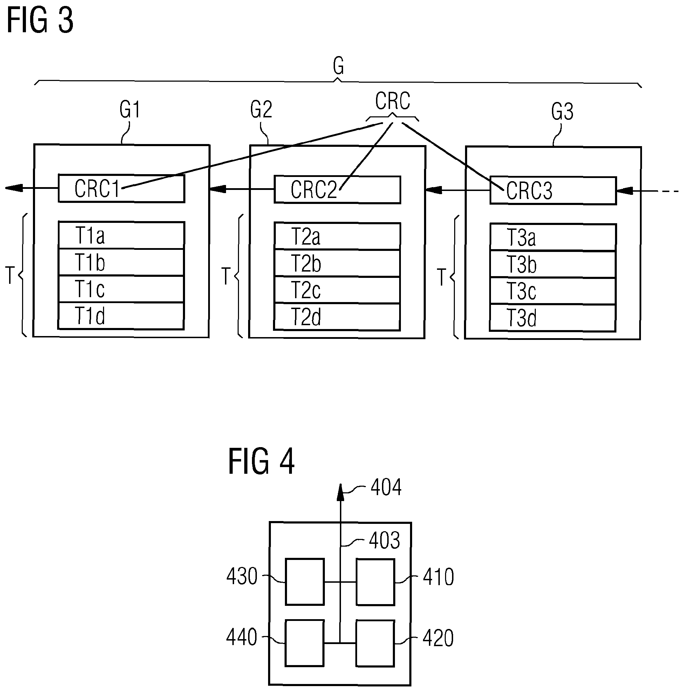

Die Fig. 3 zeigt ein drittes Ausführungsbeispiel der Erfindung, das eine Blockkette darstellt, die zur Realisierung der vorhergehenden Ausführungsbeispiele geeignet ist.

Im Einzelnen zeigt die Fig. 3 die Glieder G, beispielsweise ein erstes Glied G1, ein zweites Glied G2 und ein drittes Glied G3, einer Blockkette.

Die Glieder G umfassen jeweils mehrere Transaktionen T. Das erste Glied G1 umfasst beispielsweise eine erste Transaktion T1a, eine zweite Transaktion T1b, eine dritte Transaktion T1c und eine vierte Transaktion T1d. Das zweite Glied G2 umfasst beispielsweise eine fünfte Transaktion T2a, eine sechste Transaktion T2b, eine siebte Transaktion T2c und eine achte Transaktion T2d. Das dritte Glied G3 umfasst beispielsweise eine neunte Transaktion T3a, eine zehnte Transaktion T3b, eine elfte Transaktion T3c und eine zwölfte Transaktion T3d.

Die Glieder G umfassen jeweils zusätzlich noch eine Verkettungsprüfsumme CRC, die abhängig vom direkten Vorgänger-Glied gebildet wird. Somit umfasst das erste Glied G1 eine erste Verkettungsprüfsumme CRC1 von seinem Vorgänger-Glied, das zweite Glied G2 eine zweite Verkettungsprüfsumme CRC2 vom ersten Glied G1, und das dritte Glied G3 eine dritte Verkettungsprüfsumme CRC3 vom zweiten Glied G2. Die Verkettungsprüfsumme wird vorzugsweise über den Glied-Header des entsprechenden Vorgängergliedes gebildet. Die Verkettungsprüfsumme CRC können vorzugsweise unter Verwendung einer kryptographischen Hash-Funktion wie z. B. SHA-256, KECCAK-256 oder SHA-3 gebildet werden.

Zusätzlich kann jedes der Glieder eine Transaktions-Prüfsumme umfassen. Diese kann mittels eines Hash-Baumes realisiert werden.

Um den Hash-Baum zu bilden, wird für jede Transaktion eines Gliedes eine dritte Prüfsumme (i. A. ebenfalls ein Hash-Wert, der abhängig von den Transaktionen/Transaktionsdatensätzen gebildet wird). Üblicherweise wird ein Hash-Baum, z. B. ein Merkle Tree oder Patricia Tree, verwendet, dessen Wurzel-Hash-Wert/Wurzel-Prüfsumme vorzugsweise als Transaktions-Prüfsumme in dem jeweiligen Glied hinterlegt wird.

In einer Variante wird die Transaktions-Prüfsumme als Verkettungsprüfsumme verwendet.

Ein Glied kann weiterhin einen Zeitstempel, eine digitale Signatur, einen Proof-of-Work-Nachweis aufweisen, so wie es in den Ausführungsformen der Erfindung erläutert wurde.

Wird nun durch die in Fig. 3 dargestellte Blockkette das erfindungsgemäße Verfahren aus Fig. 1 und/oder Fig. 2 realisiert, werden vorgegebene Transkationen (z. B. Transaktionen mit Positiv-Tests und Negativ-Tests) versucht in die Blockkette einzufügen. So können beispielsweise die Positiv-Tests als die erste Transaktion T1a, die zweite Transaktion T1b und die dritte Transaktion T1c mittels des ersten Gliedes G1 als erfolgreich validierte Transaktionen mit der Blockkette verkettet werden. Zusätzlich können allgemeinen Transaktionen (z. B. Transaktionen zu Bezahlvorgängen) in der Blockkette enthalten sein. Der Vorgabewert gibt nun beispielsweise vor, dass in der Blockkette nur diese Positiv-Tests oder eine Anzahl von Positiv-Tests bzw. deren Transkationen enthalten sein dürfen. Wurde beispielsweise versucht eine vorgegebene Transaktion mit einem Negativ-Test in die Blockkette einzufügen und wäre dieser Negativ-Test in einer Transaktion T eines Gliedes G der Blockkette enthalten, würde ein Fehler vorliegen bzw. eine Abweichung vom Vorgabewert festgestellt werden.

Weiterhin wird das Ergebnis des Tests ebenfalls in Form einer erfolgreich validierten Transaktion, beispielsweise der neunten Transaktion T3a, bereitgestellt.

Die Fig. 4 zeigt ein viertes Ausführungsbeispiel der Erfindung als Testgenerator zum rechnergestützten Testen einer Blockkette. Bei der Vorrichtung kann es sich beispielsweise um das Testgenerator aus Fig. 2 handeln.

Die Vorrichtung umfasst ein Generierungsmodul 410, ein Einfügemodul 420, ein Ausführungsmodul 430, ein Testmodul 440 und eine optionale erste Kommunikationsschnittstelle 404 (z. B. zur Anbindung an das Netzwerk aus Fig. 2), die über einen ersten Bus 403 kommunikativ miteinander verbunden sind.

Die Vorrichtung kann beispielsweise zusätzlich noch eine weitere oder mehrere weitere Komponente/n umfassen, wie beispielsweise einen Prozessor, eine Speichereinheit, ein Eingabegerät, insbesondere eine Computertastatur oder eine Computermaus, und ein Anzeigegerät (z. B. einen Monitor). Der Prozessor kann beispielsweise mehrere weitere Prozessoren umfassen, wobei beispielsweise die weiteren Prozessoren jeweils eines oder mehrere der Module realisieren. Alternativ realisiert der Prozessor insbesondere alle Module des Ausführungsbeispiels. Die weitere/n Komponente/n können beispielsweise ebenfalls über den ersten Bus 403 miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das Generierungsmodul 410 ist zum Generieren einer vorgegebenen Transaktion und/oder eines vorgegebenen Smart-Contracts eingerichtet, wobei der vorgegebenen Transaktion und/oder dem vorgegebenen Smart-Contract jeweils ein Vorgabewert zugeordnet ist.

Das Generierungsmodul 410 kann beispielsweise mittels des Prozessors, der Speichereinheit und einer ersten Programmkomponente implementiert oder realisiert werden, wobei beispielsweise durch ein Ausführen von Programmbefehlen der ersten Programmkomponente der Prozessor derart konfiguriert wird oder durch die Programmbefehle der Prozessor derart konfiguriert ist, dass die vorgegebene Transaktion und/oder der vorgegebene Smart-Contracts generiert wird.

Das Einfügemodul 420 ist zum Einfügen der vorgegebenen Transaktion und/oder dem vorgegebenen Smart-Contract in die Blockkette eingerichtet.

Das Einfügemodul 420 kann beispielsweise mittels des Prozessors, der Speichereinheit und einer zweiten Programmkomponente implementiert oder realisiert werden, wobei beispielsweise durch ein Ausführen von Programmbefehlen der zweiten Programmkomponente der Prozessor derart konfiguriert wird oder durch die Programmbefehle der Prozessor derart konfiguriert ist, dass die vorgegebene Transaktion und/oder der vorgegebene Smart-Contract eingefügt wird.

Das Ausführungsmodul 430 ist zum Ausführen der vorgegebenen Transaktion und/oder des vorgegebenen Smart-Contracts eingerichtet, wobei ein Messwert des Ausführens für die vorgegebenen Transaktion und/oder den vorgegebenen Smart-Contract erfasst wird.

Das Ausführungsmodul 430 kann beispielsweise mittels des Prozessors, der Speichereinheit und einer dritten Programmkomponente implementiert oder realisiert werden, wobei beispielsweise durch ein Ausführen von Programmbefehlen der dritten Programmkomponente der Prozessor derart konfiguriert wird oder durch die Programmbefehle der Prozessor derart konfiguriert ist, dass vorgegebene Transaktion und/oder der vorgegebene Smart-Contracts ausgeführt wird.

Das Testmodul 440 ist zum Testen des Messwertes anhand des Vorgabewertes eingerichtet, wobei bei einer Abweichung von dem Vorgabewert ein Steuersignal bereitgestellt wird.

Das Testmodul 440 kann beispielsweise mittels des Prozessors, der Speichereinheit und einer vierten Programmkomponente implementiert oder realisiert werden, wobei beispielsweise durch ein Ausführen von Programmbefehlen der vierten Programmkomponente der Prozessor derart konfiguriert wird oder durch die Programmbefehle der Prozessor derart konfiguriert ist, dass der Messwert getestet wird.

Das Ausführen der Programmbefehle der jeweiligen Module kann hierbei beispielsweise mittels des Prozessors selbst und/oder mittels einer Initialisierungskomponente, beispielsweise ein Lader (engl. loader) oder einer Konfigurationskomponente, erfolgen.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

### Literaturverzeichnis

[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001

## Patentansprüche

1. Verfahren zum rechnergestützten Testen einer Blockkette mit folgenden Verfahrensschritten:
- Generieren (110) einer vorgegebenen Transaktion und/oder eines vorgegebenen Smart-Contracts, wobei der vorgegebenen Transaktion und/oder dem vorgegebenen Smart-Contract jeweils ein Vorgabewert zugeordnet ist;
- Einfügen (120) der vorgegebenen Transaktion und/oder des vorgegebenen Smart-Contracts in die Blockkette;
- Ausführen (130) der vorgegebenen Transaktion und/oder des vorgegebenen Smart-Contracts, wobei ein Messwert des Ausführens der vorgegebenen Transaktion und/oder dem vorgegebenen Smart-Contract erfasst wird;
- Testen (140) des Messwertes anhand des Vorgabewertes, wobei bei einer Abweichung von dem Vorgabewert ein Steuersignal bereitgestellt wird.

2. Verfahren nach Anspruch 1, wobei beim Einfügen versucht wird, die vorgegebene Transaktion und/oder der vorgegebene Smart-Contract in einem Glied der Blockkette zu speichern und das Glied mit mindestens einem Glied der Blockkette zu verketten.

3. Verfahren nach Anspruch 1 oder 2, wobei Glieder der Blockkette über eine kryptographische Hashfunktion (H) miteinander verkettet werden.

4. Verfahren nach einem der vorhergehenden Ansprüche, wobei das Verfahren zyklisch wiederholt oder durch einen Trigger gesteuert wird.

5. Verfahren nach einem der vorhergehenden Ansprüche, wobei bei einem erneuten Testen eine neue vorgegebene Transaktion und/oder ein neuer vorgegebener Smart-Contract mit einem neuen Inhalt und einem jeweils neuen Vorgabewert, der diesen zugeordnet wird, generiert werden.

6. Verfahren nach einem der vorhergehenden Ansprüche, wobei durch das Testen überprüft wird, ob die Blockkette noch aktiv ist.

7. Verfahren nach einem der vorhergehenden Ansprüche, wobei durch das Testen überprüft wird, ob und mit welcher Zeitverzögerung die vorgegebene Transaktion und/oder der vorgegebenen Smart-Contract in einem Glied der Blockkette enthalten ist.

8. Verfahren nach einem der vorhergehenden Ansprüche, wobei das Testen durch einen oder mehrere Knoten der Blockkette durchgeführt wird.

9. Verfahren nach einem der vorhergehenden Ansprüche, wobei die vorgegebene Transaktion und/oder der vorgegebene Smart-Contract einen Nonce-Wert umfassen.

10. Verfahren nach einem der vorhergehenden Ansprüche, wobei der Messwert und/oder die Abweichung und/oder der Vorgabewert als Transaktion in die Blockkette eingefügt oder verkettet werden, wobei dieses Einfügen durch einen Knoten unter Verwendung des Steuersignals erfolgt.

11. Testgenerator zum Testen von einer Blockkette, aufweisend:
- ein Generierungsmodul (410) zum Generieren einer vorgegebenen Transaktion und/oder eines vorgegebenen Smart-Contracts, wobei der vorgegebenen Transaktion und/oder dem vorgegebenen Smart-Contract jeweils ein Vorgabewert zugeordnet ist;
- ein Einfügemodul (420) zum Einfügen der vorgegebenen Transaktion und/oder dem vorgegebenen Smart-Contract in die Blockkette;
- ein Ausführungsmodul (430) zum Ausführen der vorgegebenen Transaktion und/oder des vorgegebenen Smart-Contracts, wobei ein Messwert des Ausführens für die vorgegebenen Transaktion und/oder den vorgegebenen Smart-Contract erfasst wird;
- ein Testmodul (440) zum Testen des Messwertes anhand des Vorgabewertes, wobei bei einer Abweichung von dem Vorgabewert ein Steuersignal bereitgestellt wird.

12. Testgenerator nach Anspruch 11, wobei der Testgenerator ein Übermittlungsmodul zum Übermitteln der vorgegebenen Transaktion und/oder dem vorgegebenen Smart-Contract aufweist.

13. Computerprogrammprodukt mit Programmbefehlen zur Durchführung der Verfahren nach einem der Ansprüche 1 - 10.

14. Computerprogrammprodukt mit Programmbefehlen für ein Erstellungsgerät, das mittels der Programmbefehle konfiguriert wird, den Testgenerator nach Anspruch 11 oder 12 zu erstellen.

15. Bereitstellungsvorrichtung für das Computerprogrammprodukt nach Anspruch 13 und/oder 14, wobei die Bereitstellungsvorrichtung das Computerprogrammprodukt speichert und/oder bereitstellt.
